# EUROPÄISCHE PATENTSCHRIFT

(11) **EP 3 950 469 B1**
(45) Veröffentlichungstag und Bekanntmachung des Hinweises auf die Patenterteilung: **05.03.2025**
(21) Anmeldenummer: 21185768.5
(22) Anmeldetag: 15.07.2021
(51) Int. Cl.: B62D 51/00, B62D 51/02

(54) **STEUER- UND MITFAHRVORRICHTUNG FÜR EINACHSFAHRZEUGE**
CONTROL AND PASSENGER DEVICE FOR SINGLE-AXLE VEHICLE
DISPOSITIF DE COMMANDE ET DE CONDUITE POUR VÉHICULES À UN SEUL ESSIEU

(30) Priorität: 16.07.2020 DE 102020118772
(43) Veröffentlichungstag der Anmeldung: 09.02.2022
(73) Patentinhaber: Brielmaier Immobilien UG & Co. KG, 88048 Friedrichshafen (DE)
(72) Erfinder: BRIELMAIER, Martin, 88048 Friedrichshafen (DE)
(74) Vertreter: Patentanwälte und Rechtsanwalt Weiß, Arat & Partner mbB

(56) Entgegenhaltungen:
- DE-A1- 102009 051 275
- GB-A- 2 542 258
- US-A1- 2018 056 152
- US-A1- 2018 346 007

## Beschreibung

### Technisches Gebiet

Die Erfindung betrifft eine Vorrichtung nach dem Oberbegriff des Anspruchs 1.

### Stand der Technik

Derartige Vorrichtungen sind bereits in vielfältiger Form und Ausgestaltung bekannt und gebräuchlich. So wird beispielsweise in der US 918 249 A ein verstellbarer Traktorsessel offenbart, welcher über eine Fussraste in seiner Winkelstellung orthogonal zur Fahrtrichtung verstellt und festgelegt werden kann.

Aus der US 2018/056152 A1 ist ein Wagen bekannt, welcher ein Basisrohr 22, eine vordere Schlittenunterbaugruppe 24, eine Lenkunterbaugruppe 26, eine Taschenhalterung 28, eine zentrale Stützunterbaugruppe 30 und eine hintere Antriebsunterbaugruppe 32 aufweist.

Aus der GB 2 542 258 ist ein Caddy System bekannt, welches zwei ausklappbare Beine 400 aufweist, wobei die Beine 400 schwenkbar mit dem Hauptkörper 200 verbunden sein können.

Aus der US 2018/346007 A1 ist ferner ein lenkbarer, selbstfahrender Wagen für die sichere Beförderung schwerer Lasten, wie z.B. Beton, innerhalb von Baustellen mit unebenem, unregelmäßigem oder schrägem Gelände bekannt.

In der DE 10 2009 051 275 A1 ferner ein Lagertechnikstapler 1 zum wahlweisen Mitgängerbetrieb offenbart.

Eine weitere Vorrichtung ist aus der AT 28 998 E bekannt. Dort wird eine schwenkbare Sitzplattform für ein landwirtschaftliches Mehrachsfahrzeug offenbart. In diesem Zusammenhang wird auch auf die DE 807 336 B verwiesen.

Insbesondere ist aber die DE 20 2019 101 237 U1 zu nennen. Hier wird für ein landwirtschaftliches Einachsfahrzeug ein in einem halbkreisbogen schwenkbar gehaltertes einstückiges Trittbrett offenbart. Die dort offenbarte Lösung ist bei einer Hanglagenfahrt deutlich begrenzt, da ein Kontakt zwischen dem Trittbrett und den Boden leicht erfolgen kann. Weiterhin ist eine Bedienung der Lenkvorrichtung, welche im Vergleich zum Trittbrett unbeweglich ist, in Schräglagen kaum möglich.

### Aufgabe der Erfindung

Die Aufgabe der vorliegenden Erfindung ist es, die Nachteile aus dem Stand der Technik zu überwinden. Insbesondere soll eine Vorrichtung bereitgestellt werden, die es erlaubt bequem auf einem Einachsfahrzeug mitzufahren und dieses zu steuern bzw. zu bedienen, wobei es möglich sein soll dies auch bei Fahrten im Gelände mit starker Hangneigung zu tun. Dabei soll ein ständiges Auf- und Absteigen möglich sein.

### Lösung der Aufgabe

Zur Lösung der Aufgabe führen die Merkmale nach dem Anspruch 1.

Vorteilhafte Ausgestaltungen sind in den Unteransprüchen beschrieben.

Vorliegende Erfindung, eine Steuer- und Mitfahrvorrichtung, eignet sich zur Kopplung an ein vorzugsweise für den landwirtschaftlichen Gebrauch geeignetes Einachsfahrzeug. Die erfindungsgemässe Steuer- und Mitfahrvorrichtung umfasst dazu eine Kopplungseinheit, einen Standbereich und einen Steuerbereich.

Der Standbereich weist eine Basis auf, welche ein zylinderförmiges Schwenklager umfasst. In Verbindung mit einem landwirtschaftlichen Einachsfahrzeug wird durch das Schwenklager ermöglicht, dass die erfindungsgemässe Steuer- und Mitfahrvorrichtung zu einer Einachs-Antriebsachse des landwirtschaftlichen Einachsfahrzeuges beidseitig schwenkbar ist.

Mit beidseitig ist gemeint, dass eine Schwenkbewegung parallel zur Einachs-Antriebsachse erfolgt, also von einem linken zu einem rechten Rad der Einachs-Antriebsachse.

Ferner umfasst die Basis einen nach dem Vorbild einer Wippe entsprechend schwenkbaren Schwenkbügel. Dieser Schwenkbügel durchgreift parallel zu der Einachs-Antriebsachse des landwirtschaftlichen Einachsfahrzeug in die Basis im Bereich einer die Basis ebenfalls durchgreifenden Schwenköffnung. Der Schwenkbügel durchgreift die Basis vollständig und reicht beidseits, also orthogonal zur Fahrtrichtung, durch die Schwenköffnung aus der Basis heraus.

Der Schwenkbügel ist sichelförmig ausgeformt und an seiner Mitte, also dem Punkt der von beiden sich gegenüberliegenden Enden gleich weit entfernt ist, mittels einer Aufhängung schwenkbar mit der Basis verbunden.

Weiterhin ist an den beiden Enden des Schwenkbügels jeweils ein ebenfalls schwenkbarer Fusstritt über jeweils ein Lager angeordnet.

Die beiden Fusstritte dienen zusammen als zweiteilige Standfläche für einen Benutzer der erfindungsgemässen Steuer- und Mitfahrvorrichtung bzw. dem mit ihr gekoppelten Einachsfahrzeug.

Die beiden Fusstritte weisen jeweils einen Anstoss auf. Der Anstoss ist ein Schutzblech, welches um den vorderen Bereich des Fusstritts, also den Bereich, der in Richtung des Einachsfahrzeuges gerichtet ist, angeordnet ist.

Weiterhin umfasst der Anstoss eine Aufnahme für die Lager, über welches der Anstoss bzw. der Fusstritt mit einem Ende des Schwenkbügels drehbeweglich verbunden ist.

Die Fusstritte weisen zudem jeweils einen Lagerbolzen auf. Dieser ist stiftförmig in Richtung des Einachsfahrzeuges ausgebildet. Über diesen Lagerbolzen ist der jeweilige Fusstritt mit dem Einachsfahrzeug drehbeweglich verbunden, wobei dazu das Einachsfahrzeug über entsprechende Lagerbolzenaufnahmen verfügt, in welche die Lagerbolzen drehbeweglich aufgenommen werden.

Über den mit der Basis schwenkbar verbundenen Schwenkbügel werden die drehbeweglich gelagerten Fusstritte in Relation zur Schwenkbewegung der Steuereinheit ausgerichtet.

Über die Kopplungseinheit, welcher auf der Seite der Basis angeordnet ist, die bei vorschriftsmässiger Verwendung in Richtung eines auf den Fusstritten stehenden Benutzers gerichtet ist, wird die erfindungsgemässe Steuer- und Mitfahrvorrichtung mit einem Einachsfahrzeug verbunden.

Hierbei ist vorgesehen, dass die erfindungsgemässe Steuer- und Mitfahrvorrichtung über die Kopplungseinheit in direkter Nähe zur Achse des Einachfahrzeuges steht. In einem vorschriftsmäßig gekoppelten Zustand liegen daher nur wenige Zentimeter, vorzugsweise weniger als 10 Zentimeter, noch bevorzugter weniger als 5 Zentimeter zwischen der Kopplungseinheit und der Achse des Einachsfahrzeuges. Dies bringt den wesentlichen Vorteil eines zu der Achse gerichteten Schwerpunktes mit sich, wodurch die Handhabung und die Beweglichkeit des Einachsfahrzeuges im Einsatz deutlich erleichtert und erhöht werden.

Die Kopplungseinheit steht mit dem Schwenklager der Basis in Wirkverbindung, so dass die o.g. Schwenkbewegungen der erfindungsgemässen Steuer- und Mitfahrvorrichtung zum Einachsfahrzeug bzw. parallel zur der Einachs-Antriebsachse erfolgen können.

In einem bevorzugten Ausführungsbeispiel ist zudem vorgesehen, dass die erfindungsgemässe Steuer- und Mitfahrvorrichtung über die Kopplungseinheit parallel zu der Achse eines Einachfahrzeuges in Richtung eines linken oder eines rechten Rades verschoben und arretiert bzw. in Richtung des jeweils hangaufwärts gerichteten Rades an der Achse des Einachsfahrzeuges verschoben und arretiert werden kann. Dazu sind auch weitere Lagerbolzenaufnahmen für die Lagerbolzen der Fusstritte am Einachsfahrzeug angeordnet. Dies ermöglicht, dass die erfindungsgemässe Steuer- und Mitfahrvorrichtung bei einer Fahrt in Hanglage aus einer mittleren Position, welche genau zwischen den beiden Rädern liegt, in eine Position parallel zur Achse hangaufwärts, also in eine Position zwischen der mittleren Position und dem hangaufwärts vorliegenden Rad verschoben werden kann.

Diese Verschiebung der erfindungsgemässe Steuer- und Mitfahrvorrichtung führt bei Fahrten in Hanglage zu einer vorteilhaften Schwerpunktverlagerung, wodurch mehr Gewicht auf das hangaufwärts gerichtete Rad übertragen wird, als auf das hangabwärts gerichtete Rad. Durch die vorteilhaftere Gewichtsverteilung auf das hangaufwärts gerichtete Rad, ist eine sichere Fahrt in Hanglage möglich, als bei herkömmlich angeordneten Mitfahrgelegenheiten von Einachsfahrzeugen, die an zentraler Position zwischen den beiden Rädern angeordnet sind. Zudem können steilere Hanglagen gefahrlos befahren bzw. bearbeitet werden, die zuvor nicht ohne weiteres befahren und bearbeitet werden konnten.

Bei dem Verschieben und Arretieren der erfindungsgemässen Steuer- und Mitfahrvorrichtung in hangaufwärts gerichteter Richtung parallel zur Achse des Einachsfahrzeuges, können unterschiedlichen Positionen eingenommen werden. Diese einzunehmenden Positionen hangaufwärts von der Mitte erlauben eine optimale Anpassung des Schwerpunktes an die vorliegenden Hangneigungen.

Das Verschieben und Arretieren der erfindungsgemässen Steuer- und Mitfahrvorrichtung auf einer zur Achse des Einachfahrzeuges parallel verlaufenden Linie, Schiene oder dergleichen, kann sowohl automatisch und gesteuert über einen Steuerbereich Steuer- und Mitfahrvorrichtung, oder manuell vor Fahrtantritt vorgenommen werden. Bei der automatischen Variante ist zudem vorgesehen, dass die Steuer- und Mitfahrvorrichtung die jeweils vorliegende Hanglage automatisch erfasst und danach die vorteilhafteste Position der Steuer- und Mitfahrvorrichtung berechnet und dann einnimmt.

Weiterhin weist die erfindungsgemässe Steuer- und Mitfahrvorrichtung eine S-Säule auf. Die S-Säule verbindet den Standbereich mit dem Steuerbereich und ist S-förmig geschwungen.

Die Basis weist eine S-Säulenverstellung auf, über welche die S-Säule mit der Basis verbunden ist. Die S-Säulenverstellung weist ihrerseits lösbar ineinandergreifende Zahnringe auf. Mittels eines Spannhebels können die Zahnringe voneinander gelöst werden, wodurch eine gewünschte Winkelstellung der S-Säule zur Basis verstellbeweglich verändert und festgelegt werden kann. Dies ermöglicht eine ergonomische Anpassung der erfindungsgemässen Steuer- und Mitfahrvorrichtung an seinen Benutzer.

Die S-Säule umfasst weiterhin ein Drehlager, über welches eine drehbare Verbindung zu einem Lenker erfolgt. Das Drehlager ermöglicht eine Schwenkbewegung des Lenkers nach dem Vorbild eines normalen Fahrradlenkers.

Weiherhin ist zwischen dem Drehlager und dem Lenker eine Lenkerverstellung angeordnet, welche, vergleichbar mit der S-Säulenverstellung, die Einstellung einer gewünschten Winkelstellung des Lenkers zur S-Säule erlaubt. Dadurch wird weiter an die ergonomischen Ansprüche des Benutzers gedacht.

Der Lenker umfasst weiterhin eine Anzeige- und Steuereinheit. Diese Anzeige- und Steuereinheit weist Bedienelemente und ein Display auf und erleichtert weiter die Bedienung des Einachsfahrzeuges.

Der Steuerbereich mit allen Bestandteilen ist über die S-Säule, die Basis und die Kopplungseinheit mit dem gekoppelten Einachsfahrzeug verbunden. Steuer- und Lenkbefehle werden über die Kopplungseinheit an das Einachsfahrzeug übertragen. Ebenso werden Informationen von dem Einachsfahrzeug an den Steuerbereich übertragen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine erfindungsgemässe Steuer- und Mitfahrvorrichtung 1 in einer frontalen Ansicht auf eine Bedienseite;
- Figur 2: die erfindungsgemässe Steuer- und Mitfahrvorrichtung 1 in einer seitlichen Ansicht;
- Figur 3: die erfindungsgemässe Steuer- und Mitfahrvorrichtung 1 in einer Ansicht schräg von oben;
- Figur 4: eine Draufsicht auf die erfindungsgemässe Steuer- und Mitfahrvorrichtung 1;
- Figur 5: einen Ausschnitt nach Figur 1 auf einen Standbereich 6;
- Figur 6: eine geschnittene Darstellung des Standbereichs 6 entlang der Schnittlinie A nach Figur 5;
- Figur 7: eine frontale Darstellung der erfindungsgemässen Steuer- und Mitfahrvorrichtung 1 die vorgesehenen Schwenkbewegungen anhand von Pfeilen verdeutlicht.

### Ausführungsbeispiel

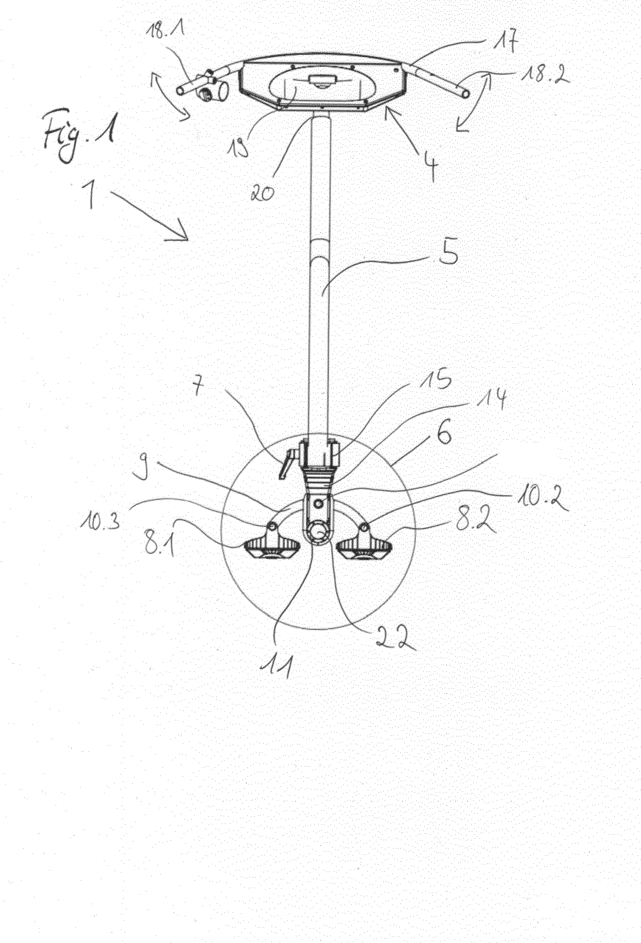

In Figur 1 ist eine erfindungsgemässe Steuer- und Mitfahrvorrichtung 1 in einer frontalen Darstellung mit Blick in Fahrtrichtung dargestellt. Mit Fahrtrichtung ist die Richtung gemeint, in welche ein Benutzer blickt, wenn die Steuer- und Mitfahrvorrichtung 1 in vorschriftsmässiger Weise mit einem landwirtschaftlichen Einachsfahrzeug verbunden ist.

Die erfindungsgemässe Steuer- und Mitfahrvorrichtung 1 weist einen Steuerbereich 4 auf. Dieser Steuerbereich 4 umfasst einen Lenker 17, ähnlich dem eines Fahrradlenkers, wobei dieser ebenso bewegt werden kann. Zwischen zwei Handgriffen 18.1 und 18.2 des Lenkers 17 ist eine Anzeige- und Steuereinheit 19 angeordnet.

Der Steuerbereich 4 ist über eine S-Säule 5 mit einem Standbereich 6 verbunden. Der Standbereich 6 und die S-Säule 5 werden durch eine S-Säulenverstellung 15, welche einen Spannhebel 7 umfasst miteinander verbunden.

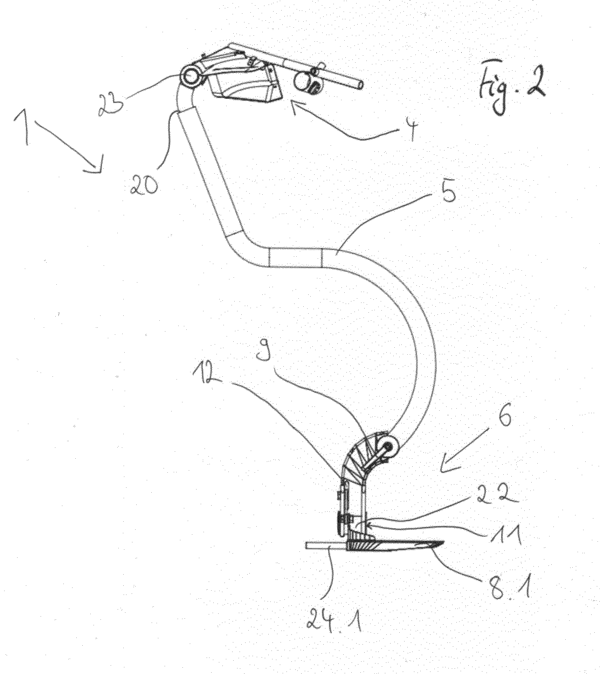

In Figur 2 ist die erfindungsgemässe Steuer- und Mitfahrvorrichtung 1 in einer seitlichen Ansicht dargestellt, wobei insbesondere die S-förmige Ausformung der S-Säule 5 in Verbindung mit dem Steuerbereich 4 ersichtlich ist. Der Lenker 17 umfasst eine Lenkerverstellung 23. Diese Lenkerverstellung 23 erlaubt die variable Verstellung des Lenkers 17 zu der S-Säule 5. Die Lenkerverstellung 23 geht mittels eines Drehlagers 20 drehbeweglich in die S-Säule 5 über. Das Drehlager 20 ermöglicht die Lenkerbewegung, welche zur Richtungssteuerung des mit der erfindungsgemässen Steuer- und Mitfahrvorrichtung 1 verbundenen landwirtschaftlichen Einachsfahrzeuges dient.

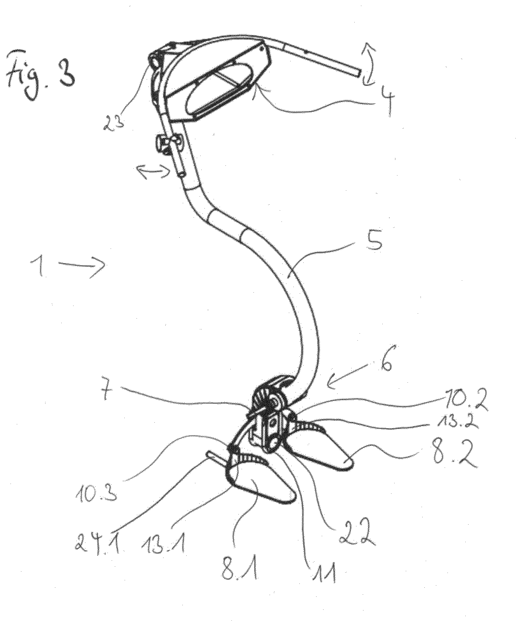

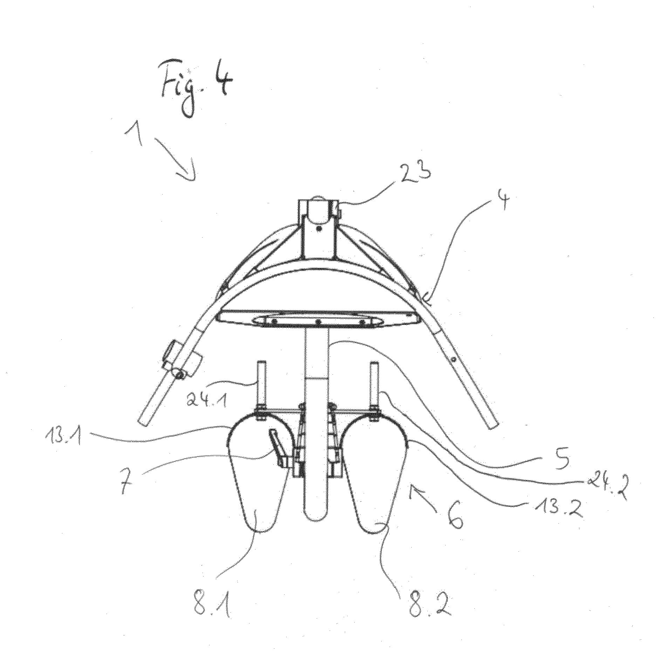

In Figur 3 und 4 ist insbesondere der Standbereich 6 gut ersichtlich, welcher sich mittels der S-Säulenverstellung 15 verstellbeweglich an die S-Säule 5 anschließt. Weiterhin sind in Figur 4 zwei Fusstritte 8.1 und 8.2 mit ihrem jeweiligen Anstoß 13.1/13.2 gut ersichtlich. Die Fusstritte 8.1 und 8.2 weisen jeweils einen Lagerbolzen 24.1, 24.2 auf. Diese Lagerbolzen 24.1, 24.2 werden in eine dafür vorgesehene Lagerbolzenaufnahme des landwirtschaftlichen Einachsfahrzeuges drehbeweglich aufgenommen. Sie bestehen aus einer besonderen Titanlegierung wodurch das Tragen des Gewichts einer mitfahrenden Person ermöglicht wird.

Die Lagerbolzen 24.1, 24.2 sind an einer Spitze der Fusstritte 8.1 und 8.2 im Bereich des jeweiligen Anstoß 13.1, 13.2 angeordnet, wobei sie von der jeweiligen Standfläche weggerichtet sind. Die Fusstritte 8.1 und 8.2 sind über die Lagerbolzen 24.1, 24.2 und entsprechende Lagerbolzenaufnahmen, die an dem landwirtschaftlichen Einachsfahrzeug angeordnet sind, mit dem landwirtschaftlichen Einachsfahrzeug drehbeweglich verbunden.

Die Lagerbolzen 24.1, 24.2 sind in den Lagerbolzenaufnahmen drehbeweglich angeordnet, so dass die Fusstritte 8.1 und 8.2 ebenfalls drehbeweglich sind. Die Führung der Drehbeweglichkeit in Abhängigkeit zu der Bewegung des Steuerbereiches 4 erfolgt durch eine schwenkbewegliche Verbindung des Schwenkbügels 9 über die Lager 10.2 und 10.3 die an dem jeweiligen Anstoß 13.1/13.2 angeordnet sind.

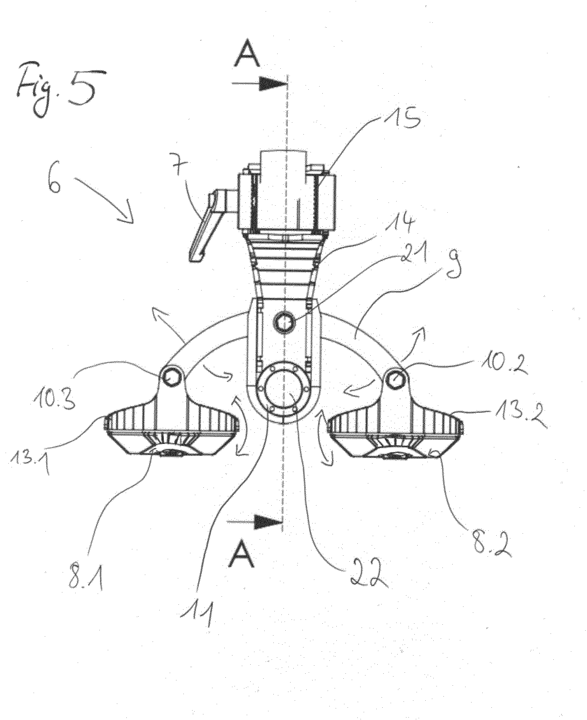

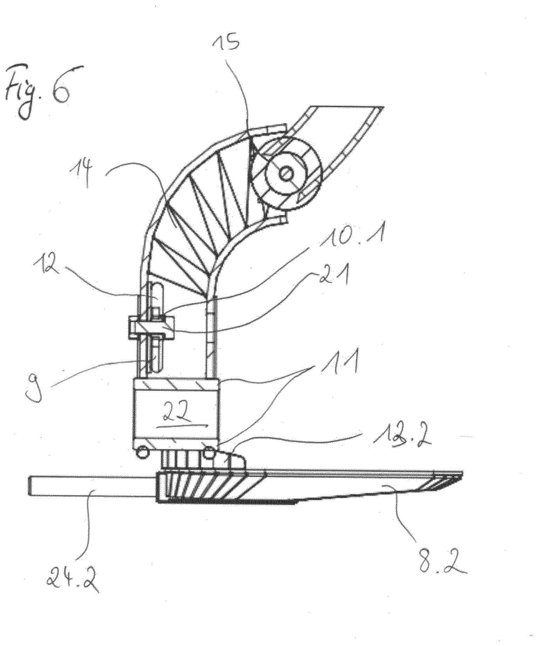

In Figur 5 und 6 sind der Standbereich 6 und die Basis 14 mit dem Schwenklager der erfindungsgemässen Steuer- und Mitfahrvorrichtung 1 detailliert ersichtlich, wobei die Figur 6 eine geschnittene Darstellung nach einer Schnittlinie A aus Figur 5 darstellt.

Die S-Säulenverstellung 15, welche über die Verstellung ineinandergreifender Zahnringe und den Spannhebel 7 in die für einen Benutzer passende Position bewegt und festgelegt werden kann, geht an der der S-Säule 5 abgewandten Seite in eine Basis 14 über. Diese Basis 14 ist umgekehrt J-Förmig ausgebildet und umfasst eine Aufhängung 21.

An dieser Aufhängung 21 ist ein sichelförmiger Schwenkbügel 9 schwenkbar an seiner Mitte angeordnet. Der Schwenkbügel 9 durchgreift die Basis 14 vollständig und reicht beidseits, also orthogonal zur Fahrtrichtung, durch eine Schwenköffnung 12 aus der Basis 14 heraus. Die Aufhängung 21 erlaubt es, dass der Schwenkbügel 9 wippenähnlich zu beiden Seiten schwenkbar ist.

Der Schwenkbügel 9 ist an seinen beiden gegenüberliegenden Enden mittels Lagern 10.2 und 10.3 mit den Fusstritten 8.1 und 8.2 drehbeweglich bzw. schwenkbar verbunden.

Weiterhin umfasst die Basis 14 eine Kopplungseinheit 11. Über diese Kopplungseinheit 11 kann die erfindungsgemässe Steuer- und Mitfahrvorrichtung 1 über einen entsprechenden Aufnahmebereich des Einachsfahrzeuges mit dem Einachsfahrzeug verbunden werden. Um den Schwerpunkt möglichst weit in Richtung der Einachs-Antriebsachse des Einachsfahrzeuges zu bringen, ist die Kopplungseinheit 11 auf der Seite der Basis 14 angeordnet, welche in Richtung der mitfahrenden Person gerichtet ist. Dadurch ist das Gewicht der gesamten erfindungsgemässen Steuer- und Mitfahrvorrichtung 1 sowie das zusätzliche Gewicht der mitfahrenden Person in direkter Nähe der Einachs-Antriebsache verortet.

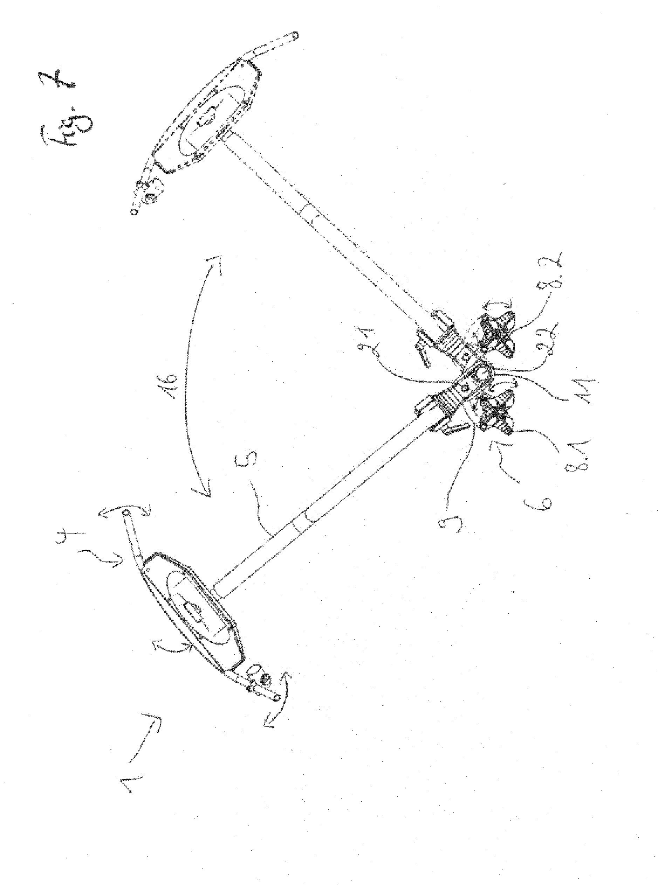

Ferner umfasst die Basis 14 im dem Bereich, der der S-Säulenverstellung 15 gegenüber liegt, ein zylinderförmiges Schwenklager 22. Dieses Schwenklager 22 erlaubt eine Schwenkung der erfindungsgemässen Steuer- und Mitfahrvorrichtung 1 parallel zu der Einachs-Antriebsachse eines Einachsfahrzeuges in Abhängigkeit einer vorherrschenden Hanglage. Diese Schwenkbewegung ist in Figur 7 durch den Pfeil 16 verdeutlicht. Das Schwenklager 22 steht mit der der Kopplungseinheit 11 in Wirkverbindung.

In Figur 7 sind zudem auch die jeweils vorgenannten Dreh- bzw. Schwenkbewegungen der erfindungsgemässe Steuer- und Mitfahrvorrichtung 1 durch weitere Pfeile dargestellt. Der Lenker 17 des Steuerbereichs 4 ist nach dem Vorbild eines Fahrradlenkers beweglich. Weiterhin sind die Wipp - Bewegung des Schwenkbügels 9 sowie die Drehbewegung der beiden sich daran anschließenden Fusstritte 8.1 und 8.2 nachvollziehbar.

Bezugnehmend auf die Figuren 1 bis 7 erklärt sich die Funktionsweise der erfindungsgemässen Vorrichtung folgendermassen:
Die erfindungsgemässe Steuer- und Mitfahrvorrichtung 1 wird über die Kopplungseinheit 11 mit einem landwirtschaftlichen Einachsfahrzeug und dessen Einachs-Antriebsachse verbunden.

Über die S-Säulenverstellung 15 und den dazu vorgesehenen Spannhebel 7 legt der Benutzer die für ihn passende Winkelstellung der S-Säule auf der Achse in Fahrtrichtung fest. Weiterhin kann der Lenker 17 des Steuerbereichs 4 mittels der Lenkerverstellung 23 in seiner Winkelstellung zu der S-Säule 5 an den Benutzer angepasst werden.

Mittels des Steuerbereichs 4, welcher den Lenker 17 mit den Handgriffen 18.1 und 18.2 und der Anzeige- und Steuereinheit 19 umfasst, wird das landwirtschaftliche Einachsfahrzeug gesteuert und bedient.

Im Standbereich 6 ermöglichen es die beiden an dem Schwenkbügel 9 drehbeweglich montierten Fusstritte 8.1 und 8.2 die über die Lagerbolzen 24.1, 24.2 und entsprechende Lagerbolzenaufnahmen mit dem Einachsfahrzeug drehbeweglich verbunden sind, dem Bediener auf die erfindungsgemässe Steuer- und Mitfahrvorrichtung 1 bzw. das mit dieser verbundene fahrende landwirtschaftliche Einachsfahrzeug aufzusteigen und in einer stehenden Position mitzufahren. Die stehende Position ist hier von wesentlicher Bedeutung, ermöglicht sie doch das jeder Zeit mögliche und schnelle Absteigen von der erfindungsgemässen Steuer- und Mitfahrvorrichtung 1 bzw. dem fahrenden landwirtschaftlichen Einachsfahrzeug. Das Absteigen erfolgt hierbei nach hinten, also entgegen der vorgesehenen Fahrtrichtung. Dies ist aus einer sitzenden Position, die zumeist ein seitliches Absteigen erfordert, nicht möglich.

Weiterhin wird durch die Wirkverbindung des Steuerbereichs bzw. der Basis über den Schwenkbügel mit den Fusstritten sichergestellt, dass die Fusstritte immer parallel zu dem zu befahrenden Boden ausgerichtet sind bzw. in abhängig zu dem Steuerbereich gedreht werden.

Landwirtschaftliche Einachsfahrzeuge insbesondere solche mit Stachelwalzenrädern erlauben das Befahren und Bearbeiten von Wiesen in Steillagen, wobei Steilhänge von über 110% Hangneigung bewältigt werden können. Dabei werden die Steillagenwiesen bevorzugt orthogonal zur Hanglage befahren, wodurch sich eine dem Hang entsprechende Schräglage des landwirtschaftlichen Einachsfahrzeuges ergibt.

Damit in solchen Schräglagen der Benutzer des landwirtschaftlichen Einachsfahrzeuges weiterhin auf diesem mitfahren kann, ermöglicht die erfindungsgemässe Steuer- und Mitfahrvorrichtung 1 mittels mehrerer o.g. dreh- und schwenkbeweglicher Komponenten eine Anpassung an diese Hangneigungen, wobei sowohl der Steuerbereich 4 als auch der Standbereich 6 eine Anpassung an die Hangneigung erfahren.

Wie in Figur 7 ersichtlich ist, ermöglichen das Schwenklager 22 in Verbindung mit dem über die Aufhängung 21 schwenkbaren Schwenkbügel 9, welcher mit den ebenfalls drehbeweglichen Fusstritten 8.1 und 8.2, die über die Lagerbolzen 24.1, 24.2 und entsprechenden Lagerbolzenaufnahme an dem Einachsfahrzeug mit dem Einachsfahrzeug drehbeweglich verbunden sind, dass ein Benutzer auch während einer Mitfahrt orthogonal zu einer zu befahrenden Hanglage aufrecht auf den Fusstritten 8.1 und 8.2 stehen kann und dabei den Steuerbereich 4 weiter wie auf einer ebenen Fläche bedienen kann. Die dafür notwenige Ausrichtung der Fusstritte in Bezug zu dem Steuerbereich 4 und einem Boden mit Hanglage erfolgt durch den Schwenkbügel 9. Dieser überträgt die Schwenkbewegung des Steuerbereichs 4 auf die Fusstritten 8.1 und 8.2.

Dabei verläuft eine gedachte Linie, die zwischen dem Lager 10.3, an welchem der Fusstritt 8.1 angeordnet ist, dem Schwenklager 22 und dem Lager 10.2, an welchem der Fusstritt 8.2 angeordnet ist. Diese gedachte Linie verläuft dabei parallel zu dem in orthogonaler Richtung zur Hangneigung befahrenen Hang.

Dabei sind, je nachdem wie stark die Hangneigung ausfällt, die beiden Fusstritte 8.1 und 8.2 in Hangrichtung höhenversetzt zueinander positioniert, da der Schwenkbügel 9 über die Aufhängung 21 mit der o.g. gedachten Linie zwischen den beiden Lagern 10.3 und 10.2 parallel zum Boden des Hanges schwenkt. Diese gedachte Linie zwischen den Lagern 10.3 der und 10.2 verläuft zudem auch immer durch das Schwenklager 22.

Das bedeutet, dass das Bein des Benutzers, welches sich auf der hangabwärts gerichteten Seite befindet durchgedrückt ist und das Bein, welches sich auf der zur hangaufwärts gerichteten Seite befindet, teilweise eingeknickt ist.

Diese geschwenkte Ausrichtung der Fusstritte in Verbindung mit der achsnahen Anordnung ermöglicht insbesondere bei steilen Hanglagen das Mitfahren des Benutzers, wobei hierbei Beschränkungen durch fehlende Bodenfreiheit nicht vorkommen. Diese Beschränkungen sind insbesondere bei einfach schwenkenden einteiligen Standflächen aus dem Stand der Technik ein Problem, was vorliegend gelöst wurde.

In einem weiteren Ausführungsbeispiel kann die geschwenkte Ausrichtung des Schwenkbügels 9 jedoch bei geringer Hangneigung durch die Bewegung des Benutzers bzw. durch einen Steuerbefehl aufgehoben werden, so dass beide Fusstritten 8.1 und 8.2 nahezu oder vollständig auf einer Ebene nebeneinander angeordnet sind, so dass dann beide Beine vollständig durchgedrückt werden können. Dies führt bei geringer Hanglagen zu einer Erhöhung des Fahrkomforts.

### Bezugszeichenliste

| | |
|---|---|
| 1 | Steuer- und Mitfahrvorrichtung |
| | |
| | |
| 4 | Steuerbereich |
| 5 | S-Säule |
| 6 | Standbereich |
| 7 | Spannhebel |
| 8.1, 8.2 | Fusstritt |
| 9 | Schwenkbügel |
| 10.2, 10.3 | Lager |
| 11 | Kopplungseinheit |
| 12 | Schwenköffnung |
| 13 | Anstoss |
| 14 | Basis |
| 15 | S-Säulenverstellung |
| 16 | Pfeil |
| 17 | Lenker |
| 18.1, 18.2 | Handgriff |
| 19 | Anzeige- und Steuereinheit |
| 20 | Drehlager |
| 21 | Aufhängung |
| 22 | Schwenklager |
| 23 | Lenkerverstellung |
| 24 | Lagerbolzen |

## Patentansprüche

1. Steuer- und Mitfahrvorrichtung (1) mit einem Steuerbereich (4) und einem Standbereich (6) mit zwei Fusstritten (8.1, 8.2) für ein Einachsfahrzeug mit einer Einachs-Antriebsachse,
**dadurch gekennzeichnet,**
**dass** der Standbereich (6) über eine S-Säule (5) mit dem Steuerbereich (4) verbunden ist und zusammen mit einer Basis (14) zu der Einachs-Antriebsachse schwenkbar über ein Schwenklager (22) gelagert ist, wobei die Basis (14) von einem an einer Aufhängung (21) in einer Schwenköffnung (12) schwenkbar angeordneten Schwenkbügel (9) durchgriffen wird, an dessen beiden Enden jeweils die ebenfalls über Lager (10.2, 10.3) schwenkbaren Fusstritte (8.1, 8.2) angeordnet sind.

2. Steuer- und Mitfahrvorrichtung (1) nach Anspruch 1, **dadurch gekennzeichnet, dass** das Lager (10.2), das Schwenklager (22) und das Lager (10.3) auf einer gedachten Linie liegen.

3. Steuer- und Mitfahrvorrichtung (1) nach Anspruch 1, **dadurch gekennzeichnet, dass** die Basis (14) über eine S-Säulenverstellung (15) mit einer S-Säule (5) verstellbeweglich verbunden ist.

4. Steuer- und Mitfahrvorrichtung (1) nach Anspruch3, **dadurch gekennzeichnet, dass** ein Lenker (17) des Steuerbereichs (4) eine Lenkerverstellung (23) umfasst, welche über ein Drehlager (20) drehbeweglich mit der S-Säule (5) verbunden ist.

5. Steuer- und Mitfahrvorrichtung (1) nach Anspruch 1, **dadurch gekennzeichnet, dass** der Lenker (17) eine Anzeige- und Steuereinheit (19) mit Bedienelementen und einem Display umfasst.

6. Steuer- und Mitfahrvorrichtung (1) nach Anspruch 1, **dadurch gekennzeichnet, dass** die beiden Fusstritte (8.1, 8.2) jeweils einen Anstoss (13) umfassen.

7. Steuer- und Mitfahrvorrichtung (1) nach Anspruch 1, **dadurch gekennzeichnet, dass** eine Wirkverbindung zwischen der Steuer- und Mitfahrvorrichtung (1) und einem landwirtschaftlichen Einachsfahrzeug durch die Kopplungseinheit (11) erfolgt.

8. Steuer- und Mitfahrvorrichtung (1) nach Anspruch 1, **dadurch gekennzeichnet, dass** die Steuer- und Mitfahrvorrichtung (1) parallel zu der Einachs-Antriebsachse des Einachfahrzeuges in Richtung eines jeweils hangaufwärts gerichteten Rades zu verschieben und zu arretieren ist.

## Claims

1. Control and drive-along device (1) with a control area (4) and a stationary area (6) with two footsteps (8.1, 8.2) for a single-axle vehicle with a single-axle drive axle,
**characterized in**
**in that** the standing area (6) is connected to the control area (4) via an S-pillar (5) and, together with a base (14), is pivotably mounted relative to the single-axle drive axle via a swivel bearing (22), the base (14) being penetrated by a swivel bracket (9) which is pivotably arranged on a suspension (21) in a swivel opening (12) and at the two ends of which the swiveling footsteps (8.1, 8.2) are arranged, which are also pivotable via bearings (10.2, 10.3).

2. Control and drive-along device (1) according to claim 1, **characterized in that** the bearing (10.2), the swivel bearing (22) and the bearing (10.3) lie on an imaginary line.

3. Control and drive-along device (1) according to claim 1, **characterized in that** the base (14) is adjustably connected to an S-pillar (5) via an S-pillar adjustment (15).

4. Control and drive-along device (1) according to claim 3, **characterized in that** a handlebar (17) of the control area (4) comprises a handlebar adjustment (23) which is connected to the S-pillar (5) in a rotatable manner via a pivot bearing (20).

5. Control and drive-along device (1) according to claim 1, **characterized in that** the handlebar (17) comprises a display and control unit (19) with operating elements and a display.

6. Control and drive-along device (1) according to claim 1, **characterized in that** the two footsteps (8.1, 8.2) each comprise an abutment (13).

7. Control and drive-along device (1) according to claim 1, **characterized in that** an operative connection between the control and drive-along device (1) and an agricultural single-axle vehicle is provided by the coupling unit (11).

8. Control and drive-along device (1) according to claim 1, **characterized in that** the control and drive-along device (1) is to be displaced and locked parallel to the single-axle drive axle of the single-axle vehicle in the direction of a respective uphill wheel.

## Revendications

1. Dispositif de commande et d'embarquement (1) comportant une zone de commande (4) et une zone de support (6) comportant deux marchepieds (8.1, 8.2) pour un véhicule à un seul essieu comportant un essieu moteur à un seul essieu,
**caractérisé en ce**
**que** la zone de support (6) est reliée à la zone de commande (4) par l'intermédiaire d'une colonne en S (5) et est montée conjointement avec une base (14) de manière à pouvoir pivoter par rapport à l'essieu moteur à un seul essieu par l'intermédiaire d'un palier de pivotement (22), dans lequel la base (14) est traversée par un étrier de pivotement (9) disposé de manière à pouvoir pivoter sur une suspension (21) dans une ouverture de pivotement (12), sur les deux extrémités dudit étrier sont respectivement disposés les marches de pied (8.1, 8.2) pouvant pivoter par l'intermédiaire d'un palier (10.2, 10.3).

2. Dispositif de commande et d'embarquement (1) selon la revendication 1, **caractérisé en ce que** le palier (10.2), le palier de pivotement (22) et le palier (10.3) sont situés sur une ligne imaginaire.

3. Dispositif de commande et d'embarquement (1) selon la revendication 1, **caractérisé en ce que** la base (14) est reliée de manière à pouvoir être réglé en mouvement à une colonne en S (5) par l'intermédiaire d'un réglage de colonne en S (15).

4. Dispositif de commande et d'embarquement (1) selon la revendication 3, **caractérisé en ce qu'**un guidon (17) de la zone de commande (4) comprend un réglage de guidon (23) qui est relié de manière mobile en rotation à la colonne en S (5) par l'intermédiaire d'un palier de rotation (20).

5. Dispositif de commande et d'embarquement (1) selon la revendication 1, **caractérisé en ce que** le guidon (17) comprend une unité d'affichage et de commande (19) comportant des éléments de manœuvre et un écran.

6. Dispositif de commande et d'embarquement (1) selon la revendication 1, **caractérisé en ce que** les deux marchepieds (8.1, 8.2) comprennent respectivement une butée (13).

7. Dispositif de commande et d'embarquement (1) selon la revendication 1, **caractérisé en ce qu**'une liaison fonctionnelle entre le dispositif de commande et d'embarquement (1) et un véhicule agricole à un seul essieu est effectuée par l'unité d'accouplement (11).

8. Dispositif de commande et d'embarquement (1) selon la revendication 1, **caractérisé en ce que** le dispositif de commande et d'embarquement (1) doit être coulissé et bloqué parallèlement à l'essieu moteur à un seul essieu du véhicule à un seul essieu en direction de respectivement une roue dirigée vers le haut de la pente.
